# FASCICULE DE BREVET EUROPEEN

(11) **EP 1 682 371 B1**
(45) Date de publication et mention de la délivrance du brevet: **30.07.2008**
(21) Numéro de dépôt: 04805783.0
(22) Date de dépôt: 27.10.2004
(51) Int. Cl.: B60K 5/12

(54) **DISPOSITIF DE FIXATION D UN GROUPE MOTOPROPULSEUR A UN CHASSIS DE VEHICULE AU MOYEN D'UNE BIELLETTE**
VORRICHTUNG ZUR BEFESTIGUNG EINER MOTOR-GETRIEBE-EINHEIT AN EINEM FAHRZEUGRAHMEN MITTELS EINER ZUGSTANGE
DEVICE FOR FIXING AN ENGINE-TRANSMISSION UNIT TO A VEHICLE CHASSIS BY MEANS OF A TIE ROD

(30) Priorité: 27.10.2003 FR 0312528
(43) Date de publication de la demande: 26.07.2006
(73) Titulaire: RENAULT S.A.S., 92100 Boulogne Billancourt (FR)
(72) Inventeur: FAUCONNIER, Alain, F-91400 SACLAY (FR)
(86) Numéro de dépôt international: PCT/FR2004/050540
(87) Numéro de publication internationale: WO 2005/042290

(56) Documents cités:
- EP-A- 0 994 007
- FR-A- 2 808 854
- US-B1- 6 390 223

## Description

L'invention concerne la fixation d'un groupe motopropulseur à un châssis de véhicule.

Il est connu, par exemple du document FR-2 736 008, de relier le groupe motopropulseur d'un véhicule au châssis du véhicule au moyen d'au moins une biellette agencée pour filtrer des vibrations provenant du châssis. Suivant les cas, la biellette pourra être agencée pour encaisser des accélérations dues aux mouvements du véhicule et/ou pour compenser un couple généré par le moteur. Le document US-B1-6 390 223 divulgue un dispositif de fixation d'apres le préambule de la revendication 1.

Un but de invention est de relier la biellette au châssis de sorte que les fonctions remplies par cette biellette le soient le plus efficacement possible et de sorte que cet agencement soit peu encombrant et peu coûteux.

A cet effet, on prévoit selon l'invention un dispositif de fixation d'un groupe motopropulseur à un châssis de véhicule, comprenant une biellette reliée au groupe et un support relié directement à la biellette et relié au châssis, dans lequel le support est relié directement à une paroi supérieure d'une coupelle d'amortisseur du véhicule.

Le dispositif pourra présenter en outre au moins l'une quelconque des caractéristiques suivantes :
- la biellette est agencée pour encaisser des efforts dus à des accélérations du véhicule :

- la biellette s'étend suivant une direction de marche du véhicule ;
- il est agencé pour filtrer des vibrations provenant du groupe ;
- le support est directement relié à une paroi supérieure de la coupelle ;
- le support est directement relié à une rehausse de la coupelle ;
- le support est d'une seule pièce ;
- le support est une pièce emboutie.
- le support comprend une paroi supérieure directement reliée à la coupelle ;
- le support comprend une paroi supérieure directement reliée à la biellette ;
- le support comprend une paroi inférieure directement reliée à la biellette ;
- le support comprend une paroi horizontale directement reliée à la coupelle ;
- le support comprend au moins une paroi horizontale directement reliée à la biellette ;
- le support comprend deux parois horizontales directement reliées à la biellette ;
- le support comprend une zone à profil en « U » directement reliée à la biellette ; et
- les branches du « U » sont formées par des parois horizontales du support.

On prévoit également selon l'invention un procédé pour fixer un groupe motopropulseur à un châssis de véhicule comprenant les étapes consistant à :
- relier une biellette au groupe ;
- relier la biellette directement à un support ; et
- relier le support directement à une coupelle d'amortisseur du véhicule.

Avantageusement, le procédé comprend l'étape préalable consistant à fabriquer le support par emboutissage.

D'autres caractéristiques et avantages de l'invention apparaîtront encore dans la description suivante d'un mode préféré de réalisation donné à titre d'exemple non limitatif en référence aux dessins annexés sur lesquels :

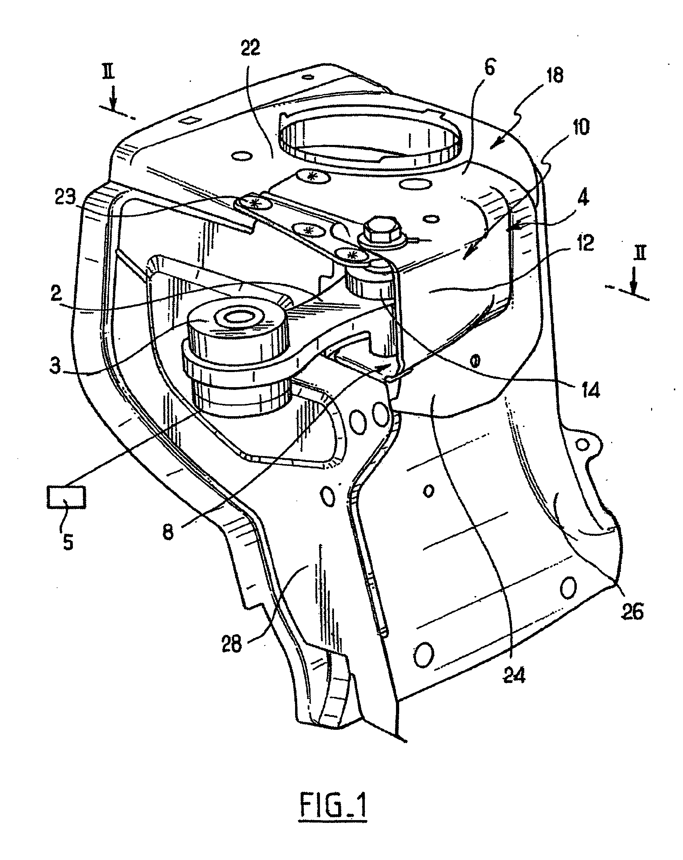

- la figure 1 est une vue en perspective montrant les pièces assurant la fixation de la biellette à la coupelle dans un mode préféré de réalisation du dispositif de invention ;

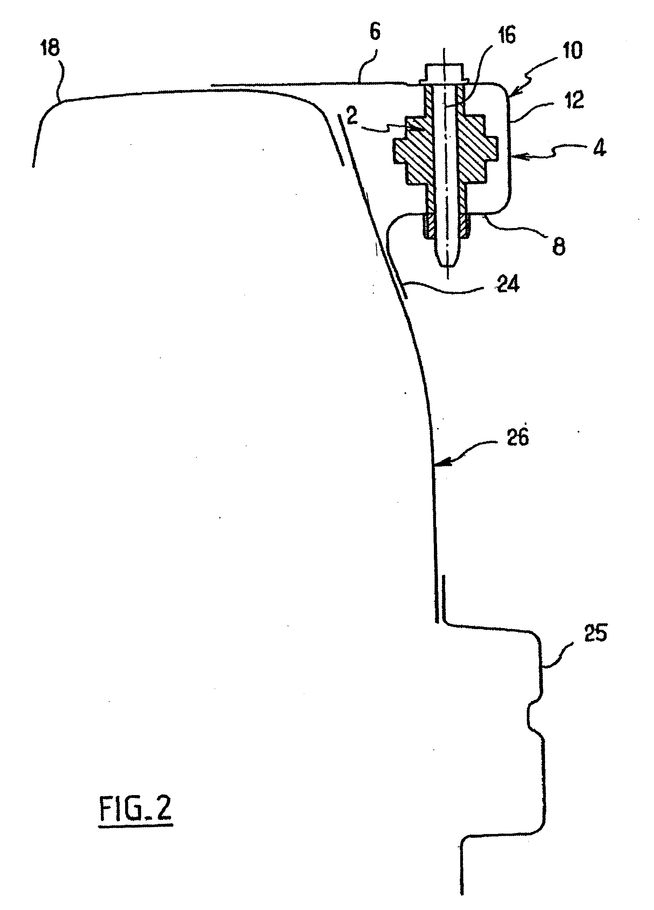

- la figure 2 est une vue en coupe verticale du dispositif dans un plan transversal à la direction de marche du véhicule à savoir le plan II-II de la figure 1 ; et
- la figure 3 est une vue en coupe dans un plan similaire montrant un amortisseur du véhicule avec la coupelle.

Dans le présent exemple, la biellette 2 est agencée pour encaisser des efforts dus à des accélérations du véhicule lorsque le véhicule prend de la vitesse ou au contraire freine. A cette fin, la biellette 2 s'étend suivant une direction de marche du véhicule.

Une première extrémité 3 de la biellette est reliée au moteur 5 par des moyens connus en eux-mêmes.

Le dispositif de fixation comprend un support 4 comprenant une paroi supérieure horizontale 6 et une paroi inférieure horizontale 8. Le support 4 présente une zone 10 à profil en « U » ayant un axe parallèle à la biellette 2. Les deux branches du « U » sont constituées par les parois 6 et 8 s'étendant en regard l'une de l'autre et sont reliées par une paroi plane verticale 12. Les deux parois 6 et 8 sont chacune globalement planes.

Une deuxième extrémité 14 de la biellette est directement fixée à chacune des parois 6 et 8 au moyen d'un organe de fixation 16 tel qu'une vis avec interposition de tampons en élastomère destinés à limiter la transmission des vibrations de la biellette jusqu'au support. Cet agencement permet à la biellette de filtrer les vibrations provenant du groupe motopropulseur.

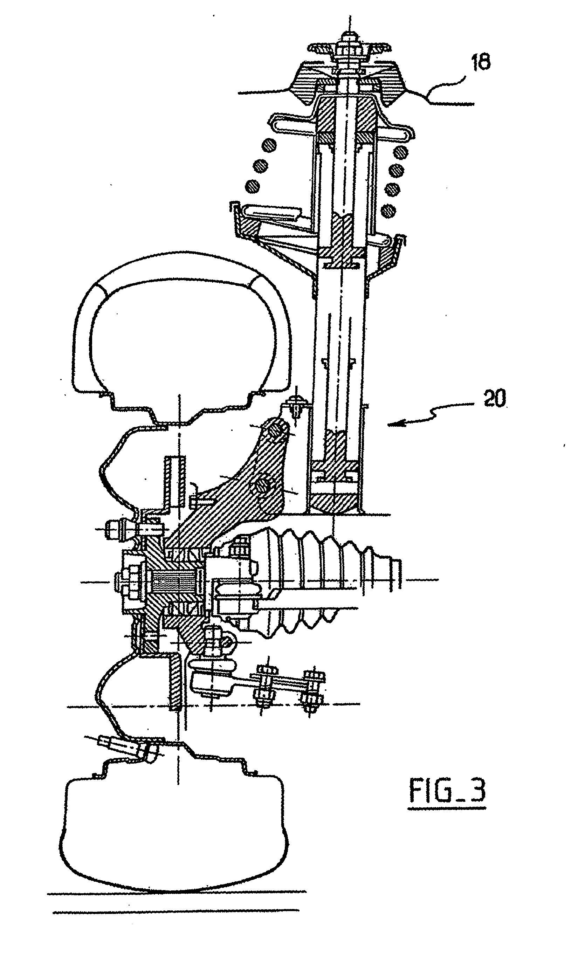

La paroi horizontale supérieure 6 est directement reliée à une coupelle 18 d'un amortisseur 20 du véhicule illustré à la figure 3. La coupelle est une pièce connue en elle-même et ne sera pas décrite en détail. La coupelle présente une paroi supérieure horizontale 22 essentiellement plane à laquelle est soudée la paroi 6 au moyen de plusieurs points de soudure 23 par exemple au nombre de trois. La coupelle 18 est pour sa part reliée au châssis du véhicule par des moyens classiques non décrits. Le châssis comprend notamment un longeron 25.

Par ailleurs, la paroi inférieure 8 du support se prolonge vers le bas à partir de son bord le plus proche de la coupelle par une paroi inférieure 24 essentiellement verticale. Cette paroi est directement fixée à une rehausse 26 de la coupelle qui est, elle aussi, une pièce connue en elle-même fixée au longeron.

Comme on le voit, la paroi supérieure horizontale 6 du support est directement reliée d'une part à la biellette 2 et d'autre part à la coupelle 18.

Le support 4 est d'une seule pièce et réalisé par emboutissage.

Le dispositif de fixation comprend en outre une paroi verticale 28 essentiellement plane s'étendant dans un plan transversal à la direction de marche du véhicule sous un bord avant de la paroi supérieure 22 de la coupelle pour fermer vers l'avant la rehausse de coupelle 26.

Pour mettre en oeuvre le procédé selon l'invention visant à fixer le groupe motopropulseur au châssis du véhicule, on relie la biellette 2 au groupe 5, on relie la biellette 2 directement au support 4 et on relie ce dernier directement à la coupelle 18. Ces différentes opérations sont effectuées dans l'ordre le plus adapté suivant les circonstances. En préalable, on aura fabriqué le support par emboutissage.

Cet agencement sera particulièrement adapté aux moteurs fournissant un couple de forte intensité tels que les moteurs diesel. L'invention fournit également une tenue efficace pour les freinages d'urgence. L'invention permet un support particulièrement rigide du moteur sur le châssis. La réalisation du support par emboutissage rend le support compact et lui donne une meilleure tenue. La paroi supérieure 22 de la coupelle apporte la raideur recherchée pour supporter le moteur.

On pourra apporter à l'invention de nombreuses modifications sans sortir du cadre de celle-ci.

## Revendications

1. Dispositif de fixation d'un groupe motopropulseur (5) à un châssis de véhicule, comprenant une biellette (2) reliée au groupe et un support (4) relié directement à la biellette (2) et relié au châssis, **caractérisé en ce que** le support (4) comprend une paroi supérieure (6) directement reliée à la biellette (2), cette paroi supérieure (6) étant reliée directement à une paroi supérieure (22) d'une coupelle (18) d'amortisseur du véhicule.

2. Dispositif selon la revendication précédente, **caractérisé en ce que** la biellette (2) est agencée pour encaisser des efforts dus à des accélérations du véhicule.

3. Dispositif selon au moins l'une quelconque des revendications précédentes, **caractérisé en ce que** la biellette (2) s'étend suivant une direction de marche du véhicule.

4. Dispositif selon au moins l'une quelconque des revendications précédentes, **caractérisé en ce qu'**il est agencé pour filtrer des vibrations provenant du groupe.

5. Dispositif selon au moins l'une quelconque des revendications précédentes, **caractérisé en ce que** le support (4) est directement relié à une rehausse de la coupelle (18).

6. Dispositif selon au moins l'une quelconque des revendications précédentes, **caractérisé en ce que** le support (4) est d'une seule pièce.

7. Dispositif selon au moins l'une quelconque des revendications précédentes, **caractérisé en ce que** le support (4) est une pièce emboutie.

8. Dispositif selon au moins l'une quelconque des revendications précédentes, **caractérisé en ce que** le support (4) comprend une paroi inférieure (8) directement reliée à la biellette (2).

9. Dispositif selon au moins l'une quelconque des revendications précédentes, **caractérisé en ce que** le support (4) comprend au moins une paroi horizontale (6, 8) directement reliée à la biellette (2).

10. Dispositif selon au moins l'une quelconque des revendications précédentes, **caractérisé en ce que** le support (4) comprend deux parois horizontales (6, 8) directement reliées à la biellette (2).

11. Dispositif selon au moins l'une quelconque des revendications précédentes, **caractérisé en ce que** le support (4) comprend une zone (10) à profil en « U » directement reliée à la biellette (2).

12. Dispositif selon la revendication 11, **caractérisé en ce que** les branches du « U » sont formées par des parois horizontales (6, 8) du support.

## Claims

1. Device for fixing a propulsion unit (5) to a chassis of a vehicle, comprising a link rod (2) connected to the unit and a support (4) connected directly to the link rod (2) and connected to the chassis, **characterized in that** the support (4) comprises a top wall (6) directly connected to the link rod (2), this top wall (6) being connected directly to a top wall (22) of a vehicle damper mount (18).

2. Device according to the preceding claim, **characterized in that** the link rod (2) is designed to absorb the loadings due to accelerations of the vehicle.

3. Device according to any one of the preceding claims, **characterized in that** the link rod (2) extends in a direction of travel of the vehicle.

4. Device according to at least any one of the preceding claims, **characterized in that** it is designed to filter out vibrations originating from the unit.

5. Device according to at least any one of the preceding claims, **characterized in that** the support (4) is directly connected to a raiser of the mount (18).

6. Device according to at least any one of the preceding claims, **characterized in that** the support (4) is made of a single piece.

7. Device according to at least any one of the preceding claims, **characterized in that** the support (4) is a pressed part.

8. Device according to at least any one of the preceding claims, **characterized in that** the support (4) comprises a bottom wall (8) directly connected to the link rod (2).

9. Device according to at least any one of the preceding claims, **characterized in that** the support (4) comprises at least one horizontal wall (6, 8) directly connected to the link rod (2).

10. Device according to at least any one of the preceding claims, **characterized in that** the support (4) comprises two horizontal walls (6, 8) directly connected to the link rod (2).

11. Device according to at least any one of the preceding claims, **characterized in that** the support (4) comprises a region (10) of U-shaped profile directly connected to the link rod (2).

12. Device according to Claim 11, **characterized in that** the branches of the U are formed by horizontal walls (6, 8) of the support.

## Patentansprüche

1. Vorrichtung zur Befestigung eines Antriebsaggregats (5) an einem Fahrzeugrahmen, mit einem Gestänge (2), das mit dem Aggregat verbunden ist, und mit einem Träger (4), der direkt mit dem Gestänge (2) und mit dem Fahrzeugrahmen verbunden ist, **dadurch gekennzeichnet, dass** der Träger (4) eine obere Wand (6) aufweist, die direkt mit dem Gestänge (2) verbunden ist, wobei diese obere Wand (6) direkt mit einer oberen Wand (22) einer Stoßdämpferschale (18) des Fahrzeugs verbunden ist.

2. Vorrichtung nach dem vorhergehenden Anspruch, **dadurch gekennzeichnet, dass** das Gestänge (2) eingerichtet ist, um durch Beschleunigungen des Fahrzeugs verursachte Kräfte aufzunehmen.

3. Vorrichtung nach mindestens einem der vorhergehenden Ansprüche, **dadurch gekennzeichnet, dass** das Gestänge (2) sich gemäß einer Fahrtrichtung des Fahrzeugs erstreckt.

4. Vorrichtung nach mindestens einem der vorhergehenden Ansprüche, **dadurch gekennzeichnet, dass** sie eingerichtet ist, um vom Aggregat kommende Schwingungen zu filtern.

5. Vorrichtung nach mindestens einem der vorhergehenden Ansprüche, **dadurch gekennzeichnet, dass** der Träger (4) direkt mit einem Aufsatz der Schale (18) verbunden ist.

6. Vorrichtung nach mindestens einem der vorhergehenden Ansprüche, **dadurch gekennzeichnet, dass** der Träger (4) aus einem Stück ist.

7. Vorrichtung nach mindestens einem der vorhergehenden Ansprüche, **dadurch gekennzeichnet, dass** der Träger (4) ein tiefgezogenes Bauteil ist.

8. Vorrichtung nach mindestens einem der vorhergehenden Ansprüche, **dadurch gekennzeichnet, dass** der Träger (4) eine untere Wand (8) aufweist, die direkt mit dem Gestänge (2) verbunden ist.

9. Vorrichtung nach mindestens einem der vorhergehenden Ansprüche, **dadurch gekennzeichnet, dass** der Träger (4) mindestens eine waagrechte Wand (6, 8) aufweist, die direkt mit dem Gestänge (2) verbunden ist.

10. Vorrichtung nach mindestens einem der vorhergehenden Ansprüche, **dadurch gekennzeichnet, dass** der Träger (4) zwei waagrechte Wände (6, 8) aufweist, die direkt mit dem Gestänge (2) verbunden sind.

11. Vorrichtung nach mindestens einem der vorhergehenden Ansprüche, **dadurch gekennzeichnet, dass** der Träger (4) eine Zone (10) mit "U-Profil" aufweist, die direkt mit dem Gestänge (2) verbunden ist.

12. Vorrichtung nach Anspruch 11, **dadurch gekennzeichnet, dass** die Schenkel des "U" von waagrechten Wänden (6, 8) des Trägers geformt werden.
